# EUROPÄISCHE PATENTSCHRIFT

(11) **EP 2 379 301 B1**
(45) Veröffentlichungstag und Bekanntmachung des Hinweises auf die Patenterteilung: **20.02.2013**
(21) Anmeldenummer: 09768368.4
(22) Anmeldetag: 07.12.2009
(51) Int. Cl.: B29C 45/16, B62D 29/00

(54) **VERFAHREN ZUR HERSTELLUNG EINES VERBUNDBAUTEILS DURCH MEHRKOMPONENTENSPRITZGUSS, SOLCHER VERBUNDBAUTEIL UND VERWENDUNG EINER MISCHUNG ZUR HERSTELLUNG DES VERBUNDBAUTEILS**
METHOD FOR PRODUCING A COMPOSITE COMPONENT BY MULTI-COMPONENT INJECTION MOLDING, SAID COMPOSITE COMPONENT AND USE OF A MIXTURE FOR THE PRODUCTION OF THE COMPOSITE COMPONENT
PROCEDE DE FABRICATION D'UN ELEMENT COMPOSITE PAR MOULAGE PAR INJECTION A PLUSIEURS COMPOSANTS, LE DIT ELEMENT COMPOSITE ET UTILISATION D'UNE MELANGE POUR LA PRODUCTION DE L'ELEMENT COMPOSITE

(30) Priorität: 19.12.2008 EP 08172372
(43) Veröffentlichungstag der Anmeldung: 26.10.2011
(73) Patentinhaber: BASF SE, 67056 Ludwigshafen (DE)
(72) Erfinder: JAKOBI, Reinhard, 67133 Maxdorf (DE); BARTL, Jürgen, 67063 Ludwigshafen (DE); FISCHER-JERDONEK, Kamil, 67227 Frankenthal (DE); GIBON, Cécile, 68159 Mannheim (DE); KRÖGER, Harald, 67459 Böhl-Iggelheim (DE); ZEIHER, Susanne, 67071 Ludwigshafen (DE)
(86) Internationale Anmeldenummer: PCT/EP2009/066520
(87) Internationale Veröffentlichungsnummer: WO 2010/069804

(56) Entgegenhaltungen:
- EP-A2- 1 607 204
- DE-A1- 4 304 751
- DE-T2- 60 214 699
- US-A- 3 728 292
- IN YEE PHANG ET AL: "Morphology, thermal and mechanical properties of nylon 12/organoclay nanocomposites prepared by melt compounding" POLYMER INTERNATIONAL, 2005, Seiten 456-464, XP002570181
- H. ULF W. ROHDE-LIEBENAU: "Nylon 12" In: "POLYMER DATA HANDBOOK" 1999, Oxford University Press , XP002570182 , Seiten 225-229 Tabelle auf Seite 226
- ANONYMOUS: "Ultramid 1C the soluble polyamide" Juli 2007 (2007-07), Seiten 1-4, XP002570183 Gefunden im Internet: URL:http://www.plasticsportal.net/wa/plast icsEU~en_GB/function/conversions:/publish/ common/upload/engineering_plastics/Ultrami d_1C.pdf> [gefunden am 2010-02-18]

## Beschreibung

Die Erfindung betrifft Verfahren zur Herstellung eines Verbundbauteils durch Mehrkomponentenspritzguss, wobei das Verbundbauteil einen Grundkörper aus einem thermoplastischen Kunststoff A) und eine Außenschicht aus einem geschäumten thermoplastischen Kunststoff B) umfasst, wobei bei diesen Verfahren in einem ersten Verfahrensschritt a) durch Spritzgießen des thermoplastischen Kunststoffs A) und anschließender Verfestigung desselben in einer Spritzgießform der Grundkörper hergestellt wird, und in einem direkt anschließenden zweiten Verfahrensschritt b) durch Spritzgießen einer Mischung, umfassend den thermoplastischen Kunststoff B) und ein chemisches Treibmittel, und anschließender Verfestigung der Mischung in derselben Spritzgießform, mit jedoch erweiterter Kavität, eine Außenschicht an den Grundkörper angespritzt wird, und in einem weiteren Verfahrensschritt d) die an den Grundkörper angespritzte Außenschicht durch Zufuhr thermischer Energie aufgeschäumt wird, und in einem abschließenden Verfahrensschritt e) durch Abkühlung die Verfestigung des Verbundbauteils erfolgt.
Weiterhin betrifft die Erfindung Verbundbauteile und verstärkte Trägerelemente, welche nach diesen Verfahren herstellbar sind, sowie Mischungen und die Verwendung dieser Mischungen zur Herstellung von Verbundbauteilen.

Bei der Konstruktion von tragenden Elementen, beispielsweise der Konstruktion von Karosserieteilen für den Kraftfahrzeugbau, wird in der Regel eine größtmögliche Stabilität, Steifigkeit und/oder Belastbarkeit bei gleichzeitig geringstmöglichem Gewicht gewünscht. Oftmals werden daher Trägerelemente verwendet, die als Hohlprofil ausgeführt sind, Hohlräume aufweisen oder zumindest teilweise schalenförmig ausgeführt sind. Um die Stabilität dieser Trägerelemente weiter zu erhöhen, werden diese oftmals mit Verstärkungselementen aus Kunststoff zusätzlich verstärkt. Als geeignete Verstärkungselemente für Trägerelemente sind in der Literatur verschiedenartige Verbundbauteile aus Kunststoff beschrieben.

Beispielsweise werden in DE 602 14 699 T2 Strukturverstärkungselemente beschrieben, die zur Verstärkung eines hohlen Strukturelements geeignet sind, und die ein Verstärkungselement umfassen, welches auf einem Abschnitt seiner Oberfläche ein expandierbares Klebematerial aufweist. Als bevorzugtes expandierbares Klebematerial werden schäumbare epoxid-basierte Harze genannt. Es werden mehrere Verfahren zur Herstellung dieser Verstärkungselemente genannt, unter anderem Zweikomponentenspritzguss.

J. Kempf und M. Derks, "Karosserie-Leichtbau: Einsatz von Strukturschäumen in Hohlprofilen", in VDI Gesellschaft Kunststofftechnik, Kunststoffe im Automobilbau, VDI Verlag GmbH, Düsseldorf 2006, S. 193-205, offenbaren Strukturschaumteile, bei denen beispielsweise Träger aus Polyamid im Zweikomponentenspritzguss mit unvernetztem Strukturschaum auf Basis von Epoxidharzen hergestellt werden. Diese Strukturschaumteile werden dann im Karosseriebauprozess in Hohlprofile eingefügt, die Expansion und Aushärtung der Epoxid-Schäume erfolgt bevorzugt durch Temperatureinwirkung im Lackierprozess. Als Anforderungen an den Strukturschaum wird unter anderem ein E-Modul bei 80°C von größer 500 MPa genannt.

In der nicht vorveröffentlichten Europäischen Patentanmeldung 08159517.5 (Aktenzeichen) werden schäumbare Mischungen aus thermoplastischen Polyamiden und einem als chemischem Treibmittel wirkenden Copolymer gelehrt. Diese Mischungen können beispielsweise im Mehrkomponentenspritzgussverfahren auf ein Kernmaterial aus glasfaserverstärktem Polyamid aufgebracht werden, so dass schäumbare Verstärkungsteile entstehen. Diese Verstärkungsteile lassen sich in Hohlprofile einfügen und aufschäumen.

Diese im Stand der Technik beschriebenen Verfahren zur Herstellung von Verbundbauteilen durch Mehrkomponentenspritzguss sowie die nach diesen Verfahren herstellbaren Verbundbauteile mit schäumbarer bzw. geschäumter Außenschicht, insbesondere die als vorteilhaft beschriebenen und auf schäumbaren Epoxidharzen basierenden Verbundbauteile, sind bezüglich einiger Eigenschaften verbesserungswürdig. So sind im Zweikomponentenspritzgießverfahren mit Epoxidharzen aufgrund der hohen Schmelzeviskosität entweder relativ lange Zykluszeiten in Kauf zu nehmen oder es müssen hohe Spritzdrucke aufgewendet werden, beides führt zu erhöhten Kosten. Auch die computergestützte rheologische Modellierungen bzw. Optimierungen des Spritzgießverfahrens mit Epoxidharzen zur Minimierung kostenträchtiger Praxisversuche ist nicht in wünschenswertem Maß möglich. Weiterhin ist oftmals die Haftung der expandierbaren bzw. expandierten Epoxidharz-Außenschicht auf dem Grundkörper unzureichend, so dass die Verbundbauteile nur eingeschränkt als Verstärkungselement einsetzbar sind. Ferner sind diese bekannten Verbundbauteile bezüglich ihrer Lager- und/oder Feuchtebeständigkeit sowohl im expandierbaren als auch im expandierten Zustand oftmals noch verbesserungswürdig. Auch das nach Ablauf der Nutzungsdauer wünschenswerte Recyclieren dieser bekannten Verbundbauteile ist oftmals nur mit erheblichem Aufwand möglich.

Aufgabe der vorliegenden Erfindung war es daher, Verfahren zur Herstellung von Verbundbauteilen durch Mehrkomponentenspritzguss zur Verfügung zu stellen, die durch verringerte Zykluszeiten und/oder verringerte Spritzgießdrucke und/oder bessere computergestützte Modellierbarkeit kostengünstiger sind, und nach denen Verbundbauteile herstellbar sind, die bezüglich der Kombination der folgenden Eigenschaften
- Haftung der expandierbaren bzw. expandierten Außenschicht auf dem Grundkörper,
- Lager- und/oder Feuchtebeständigkeit sowohl im expandierbaren als auch im expandierten Zustand sowie
- Recyclierbarkeit
gegenüber bekannten Verbundbauteilen verbessert sind.

Demgemäß wurden die eingangs genannten Verfahren zur Herstellung von Verbundbauteilen durch Mehrkomponentenspritzguss gefunden, wobei erfindungswesentlich ist, dass die in Verfahrensschritt b) eingesetzte Mischung als thermoplastischen Kunststoff B) mindestens ein Polyamid mit einem im gesamten Temperaturbereich von 70°C bis 180°C vorliegenden Elastizitätsmodul aus dem Zugversuch (Zugmodul) Eₜ von 1 MPa bis 250 MPa (bestimmt gemäß DIN EN ISO 527 vom April 1996) und als chemisches Treibmittel ein oder mehrere in nicht-polymerisierter Form vorliegende Stoffe umfasst. Weiterhin wurden Verbundbauteile und verstärkte Trägerelemente gefunden, die nach den erfindungsgemäßen Verfahren herstellbar sind, sowie Mischungen und die Verwendung der Mischungen zur Herstellung dieser Verbundbauteile.

Die erfindungsgemäßen Verfahren sind ggü. bekannten Verfahren zur Herstellung von Verbundbauteilen durch Mehrkomponentenspritzguss durch verringerte Zykluszeiten und/oder verringerte Spritzgießdrucke und/oder bessere computergestützte Modellierbarkeit kostengünstiger; die nach diesen erfindungsgemäßen Verfahren herstellbaren Verbundbauteile weisen bezüglich der Kombination aus Haftung der expandierbaren bzw. expandierten Außenschicht auf dem Grundkörper, Lager- und/oder Feuchtebeständigkeit sowohl im expandierbaren als auch im expandierten Zustand sowie ihrer Recyclierbarkeit Vorteile gegenüber bekannten Verbundbauteilen, insbesondere solchen, deren Außenschicht auf schäumbaren Epoxidharzen basiert, auf.

Die erfindungsgemäßen Verfahren sowie die weiteren erfindungsgemäßen Gegenstände und Verwendungen werden im Folgenden beschrieben.

Verfahren zur Herstellung von Verbundbauteilen durch Mehrkomponentenspritzguss, insbesondere durch Zweikomponentenspritzguss, als solche sind dem Fachmann bekannt und in der Literatur beschrieben, beispielsweise in Sächtling Kunststoff-Taschenbuch, 29. Ausgabe, 2004, Carl Hanser Verlag München Wien, S. 222.

Üblicherweise wird im Mehrkomponentenspritzguss, beispielsweise im Zweikomponentenspritzguss, in einem ersten Verfahrensschritt a) ein thermoplastischer Kunststoff A) in einer Spritzgießmaschine aufgeschmolzen und in eine Spritzgießform bis zu deren vollständiger Füllung eingespritzt. Die Temperatur der Schmelze des thermoplastischen Kunststoffs A) in der Spritzgießmaschine (Spritzgießtemperatur) richtet sich im wesentlichen nach der Art des Kunststoffs A) und liegt in dem Fachmann bekannten Bereichen, beispielsweise für Polyamid im Bereich von 220°C bis 350°C, bevorzugt von 250°C bis 320°C, besonders bevorzugt von 260°C bis 300°C. Die Werkzeugtemperaturen (Temperaturen in der Spritzgießform) liegen dabei im Bereich von 20°C bis 120°C, vorzugsweise im Bereich von 40°C bis 100°C. Durch Abkühlen verfestigt sich dieser Kunststoff A) unter Bildung eines Grundkörpers. Entweder durch die Abkühlung und den damit verbundenen Volumenschwund des Kunststoffs A) oder bevorzugt durch eine Erweiterung der Kavität der Spritzgießform, beispielsweise durch teilweises Öffnen der Spritzgießform nach der Verfestigung des Kunststoffs A), werden ungefüllte Räume in der Spritzgießform gebildet. Die Erweiterung der Kavität der Spritzgießform wird in einer weiteren bevorzugten Ausführungsform durch das Ziehen eines Schiebers realisiert oder durch das Umsetzen des Grundkörpers innerhalb der Spritzgießform in eine andere, größere Kavität (sogenanntes Drehteller-Werkzeug).

Anschließend wird in einem zweiten Verfahrensschritt b) eine Mischung, umfassend einen vom thermoplastischen Kunststoff A) verschiedenen thermoplastischen Kunststoff B) und ein chemisches Treibmittel, in derselben oder einer anderen Spritzgießmaschine aufgeschmolzen und in die in Verfahrensschritt a) gebildeten ungefüllten Räume derselben Spritzgießform eingespritzt. Durch Abkühlen verfestigt sich der thermoplastische Kunststoff B) unter Ausbildung einer den Grundkörper ganz oder teilweise bedeckenden Außenschicht, bevorzugt einer den Grundkörper vollständig bedeckenden Hülle. In analoger Weise ist das Anspritzen weiterer Schichten thermoplastischer Kunststoffe möglich. Die Temperatur der Schmelze der Mischung, umfassend den thermoplastischen Kunststoff B) und ein chemisches Treibmittel, in der Spritzgießmaschine (Spritzgießtemperatur) wird üblicherweise höher gewählt als in Verfahrensschritt a), damit ein oberflächliches Aufschmelzen des Grundkörpers ermöglicht wird. Aufgrund der niedrigen Wärmeleitung des Kunststoffs bleibt der Grundkörper dabei weitgehend im verfestigten Zustand. Im Rahmen der vorliegenden Erfindung kann aufgrund der guten Hafteigenschaften des thermoplastischen Kunststoffs B) dieser in Mischung mit dem chemischen Treibmittel aber auch bei niedrigeren Temperaturen als der thermoplastische Kunststoff A) verarbeitet werden, so dass ein Aufschäumen des thermoplastischen Kunststoffs B) durch Zersetzung des chemischen Treibmittels weitestgehend vermieden wird. Vorteilhaft zur Vermeidung eines Aufschäumens des thermoplastischen Kunststoffs B) bereits in Verfahrensschritt b) ist eine niedrige Verweilzeit in der Plastifiziereinheit der Spritzgießmaschine und eine möglichst niedrige Spritzgieß- und Werkzeugtemperatur. Die Spritzgießtemperatur liegt üblicherweise im Bereich von 180°C bis 260°C, bevorzugt von 180°C bis 230°C, besonders bevorzugt von 180°C bis 200°C. Zum Abschluss des Verfahrensschritts b) werden die so hergestellten Verbundbauteile aus Grundkörper und im wesentlichen noch nicht geschäumter Außenschicht abgekühlt bei gleichzeitiger Verfestigung aus der Spritzgießform ausgeworfen.

Diese Verbundbauteile können sofort gemäß den folgenden Verfahrensschritten weiterverarbeitet werden, sie können aber auch über mehrere Wochen und Monate gelagert werden, bevor die Weiterverarbeitung gemäß der folgenden Verfahrensschritte erfolgt.

Nach diesem zweiten Verfahrensschritt b) und vor dem weiteren, in der Folge noch beschriebenen Verfahrensschritt d) kann der Grundkörper mit angespritzter Außenschicht in einem optionalen Verfahrensschritt c) nach dem Fachmann bekannten Methoden in ein Trägerelement, welches mindestens einen Hohlraum aufweist oder zumindest teilweise schalenförmig oder als Hohlprofil ausgeführt ist, eingebracht und in diesem fixiert werden. Dieser Verfahrensschritt c) ist insbesondere dann durchzuführen, wenn das nach dem abschließenden Verfahrensschritt e) erhaltene Verbundbauteil als stoff- und/oder formschlüssig mit dem Trägerelement verbundenes Verstärkungselement wirken soll. Wird der Verfahrensschritt c) nicht durchgeführt, werden nach dem abschließenden Verfahrensschritt e) Verbundbauteile aus einem Grundkörper und einer geschäumten Außenschicht erhalten, die nur in zusätzlichen Arbeitsschritten und nachträglich als Verstärkungselemente für Trägerelemente einsetzbar sind, die aber in anderen Funktionen, beispielsweise als Schall- oder Temperaturdämmelemente, einsetzbar sind.

In einem weiteren Verfahrensschritt d) wird die an den Grundkörper angespritzte Außenschicht durch Zufuhr thermischer Energie nach dem Fachmann bekannten Methoden aufgeschäumt. Die bei diesem Schäumprozess einzustellende Temperatur (Schäumtemperatur) richtet sich nach der Art des chemischen Treibmittels und liegt oberhalb der Erweichungstemperatur des thermoplastischen Kunststoffs B), üblicherweise in Bereichen von 120°C bis 220°C, bevorzugt von 150°C bis 200°C, besonders bevorzugt von 180°C bis 200°C.
In einer bevorzugten Ausführungsform, bei der Verfahrensschritt c) ausgeführt wurde, können die Verbundbauteile nach dem Fachmann bekannten und in der Literatur (beispielsweise in DE 602 14 699 T2 und J. Kempf und M. Derks, "Karosserie-Leichtbau: Einsatz von Strukturschäumen in Hohlprofilen", in VDI Gesellschaft Kunststofftechnik, Kunststoffe im Automobilbau, VDI Verlag GmbH, Düsseldorf 2006, S. 193-205) beschriebenen Verfahren durch Aufschäumen der Außenschicht zu Verstärkungselementen für hohlraum-aufweisende oder zumindest teilweise schalenförmig oder als Hohlprofil ausgeführte Trägerelemente weiterverarbeitet werden. Die durch Zufuhr thermischer Energie expandierende Außenschicht der Verbundbauteile füllt ganz oder teilweise die hohlraum- oder schalenförmig oder als Hohlprofil ausgebildeten Bereiche des Trägerelements. Aufgrund der besonderen Eigenschaften des thermoplastischen Kunststoffs B) verklebt dabei das Verbundbauteil mit dem Trägerelement.
Wenn das Trägerelement ein Karosserieteil eines Kfz ist, lässt sich der Verfahrensschritt d) in besonders vorteilhafter Weise energieeffizient während des Lackierprozesses der Karosserie durchführen. Die während der Trocknung des üblicherweise kathodisch aufgebrachten Tauchlacks herrschenden Temperaturen von 160°C bis 220°C, bevorzugt von 180°C bis 210°C, besonders bevorzugt von 185°C bis 205°C, bewirken gleichzeitig das Aufschäumen der angespritzten Außenschicht.
Der durch das Aufschäumen und nach dem Verfahrensschritt e) bewirkte Stoff- und/oder Formschluss ermöglicht beispielsweise auch die Herstellung von verstärkten Trägerelementen, wie sie in EP 1 084 816 A2 beschrieben sind (die verstärkten Trägerelemente werden dort als "Verbundbauteil (3)" bezeichnet).

Im abschließenden Verfahrensschritt e) erfolgt die Verfestigung der geschäumten Außenschicht, die je nach Art des eingesetzten expandierbaren Kunststoffs B) z.B. durch Vernetzungsreaktion in der Hitze oder durch Abkühlung unter die Verfestigungstemperatur erreicht werden kann.

Nach Verfahrensschritt e) werden - bei Nichtdurchführung des Verfahrensschrittes c) - Verbundbauteile umfassend einen Grundkörper aus einem thermoplastischen Kunststoff A) und eine Außenschicht aus einem geschäumten thermoplastischen Kunststoff B) erhalten.
Bevorzugt werden - bei Durchführung des Verfahrensschritte c) - verstärkte Trägerelemente umfassend ein Trägerelement und ein stoff- und/oder formschlüssig mit dem Trägerelement verbundenes und als Verstärkungselement wirkendes Verbundbauteil, wobei das Verbundbauteil einen Grundkörper aus einem thermoplastischen Kunststoff A) und eine Außenschicht aus einem geschäumten thermoplastischen Kunststoff B) umfaßt, erhalten. Der Grundkörper des Verbundbauteils trägt maßgeblich zur strukturellen bzw. mechanischen Verstärkung des Trägerelementes bei, die geschäumte Außenschicht des Verbundbauteils dient maßgeblich der stoff- und/oder formschlüssigen Verbindung mit dem Trägerelement.

Als thermoplastische Kunststoffe A) kommen grundsätzlich alle dem Fachmann bekannten und in der Literatur beschriebenen thermoplastisch verarbeitbaren Kunststoffe infrage, beispielsweise Polyolefine, Polyamide, Polyurethane, Polyester, Polyethersulfone, Polyacrylate, Polyacetate sowie Kunststoffe aus Vinylgruppen enthaltenden Monomeren oder auf Styrol als Monomer basierenden Kunststoffen.

Im Allgemeinen einsetzbare Polyolefine sind zum Beispiel Polyethylen, Polypropylen, Polybuten-1, Polytetrafluorethylen. Als Polyamide eignen sich zum Beispiel Polyamid 6, Polyamid 11, Polyamid 6/6, Polyamid 6/10 oder Polyamid 6/12. Geeignete Polyester sind beispielsweise Polyethylenterephthalat, Polybutylenterephthalat oder Polycarbonat. Üblicherweise eingesetzbare Polyacrylate sind beispielsweise Poly(meth)acrylsäureester, Polymethacrylat oder Polyacrylnitril. Als Polyacetal kann beispielsweise Polyoxymethylen eingesetzt werden. Geeignete Polymere, die Monomereinheiten mit Vinyl-Gruppen enthalten, sind zum Beispiel Polyvinylchlorid, Polyvinylidenchlorid, Polyvinylcarbazol, Polyvinylacetat oder Polyvinylalkohol. Auf Styrol basierende geeignete Kunststoffe sind beispielsweise Polystyrol, schlagzähmodifiziertes Polystyrol, Acrylnitril-Butadie-Styrol-Copolymere, Styrolacrylnitril-Copolymere und Acrylester-Styrol-Acrylnitril-Copolymere. Weitere geeignete Thermoplaste sind Polyethersulfon und Polyetherimid. Weiterhin können auch Mischungen der vorstehend genannten Polymere oder Copolymerisate eingesetzt werden.

Bevorzugte thermoplastische Kunststoffe A) sind Polyamide.

In einer besonders bevorzugten Ausführungsform sind die thermoplastischen Kunststoffe A) faserverstärkt. Zur Verstärkung kann jede beliebige, dem Fachmann bekannte, zur Verstärkung übliche Faser verwendet werden. Geeignete Fasern sind zum Beispiel Glasfasern, Kohlenstofffasern, Aramidfasern, Borfasern, Metallfasern oder Kaliumtitanatfasern. Die Fasern können in Form von Kurzfasern oder von Langfasern eingesetzt werden. Auch können die Fasern geordnet oder ungeordnet im Polymermaterial enthalten sein. Insbesondere bei Einsatz von Langfasern ist jedoch eine geordnete Anordnung üblich. Die Fasern können dabei in Form von Einzelfasern, Rovings oder Fasermatten eingesetzt werden. Ein ganz besonders bevorzugter thermoplastischer Kunststoff A) ist faserverstärktes, insbesondere glasfaserverstärktes, Polyamid.

Die thermoplastischen Kunststoffe A) können auch weitere Zusatzstoffe enthalten. Dies sind zum Beispiel übliche Weichmacher, Schlagzähmodifizierer, Flammschutzmittel und weitere, dem Fachmann bekannte Additive, die üblicherweise Kunststoffen zugesetzt werden.

In den erfindungsgemäßen Verfahren können der thermoplastische Kunststoff A) und der thermoplastische Kunststoff B) identisch sein, bevorzugt wird als thermoplastischer Kunststoff A) aber ein vom thermoplastischen Kunststoff B), insbesondere bezüglich der chemischen Zusammensetzung, der physikalischen Eigenschaften und/oder der enthaltenen Zusatzstoffe, verschiedenes Polymer eingesetzt. Besonders bevorzugt wird neben dem als thermoplastischem Kunststoff B) eingesetztem Polyamid auch als thermoplastischer Kunststoff A) ein - insbesondere glasfaserverstärktes - Polyamid, welches sich beispielsweise in der Monomerzusammensetzung oder im Elastizitätsmodul vom thermoplastischem Kunststoff B) unterscheidet, eingesetzt; in dieser Ausführungsform der Erfindung sind die erfindungsgemäß erhaltenen Verbundbauteile nach dem Ende der Nutzungsdauer besonders gut und leicht recyclierbar.

Im zweiten Verfahrensschritt b) wird eine Mischung, umfassend den thermoplastischen Kunststoff B) und ein chemisches Treibmittel, eingesetzt.
Diese Mischung umfasst vorzugsweise 70 Gew.-% bis 99,9 Gew.-%, insbesondere 90 Gew.-% bis 99 Gew.-%, besonders bevorzugt 95 Gew.-% bis 99 Gew.-%, thermoplastischen Kunststoff B) und 30 Gew.-% bis 0,1 Gew.-%, insbesondere 10 Gew.-% bis 1 Gew.-%, besonders bevorzugt 5 Gew.-% bis 1 Gew.-%, chemisches Treibmittel, wobei die Gew.-% jeweils bezogen sind auf das Gesamtgewicht von thermoplastischem Kunststoff B) und chemischem Treibmittel und zusammen 100 Gew.-% ergeben. Die Mischung und/oder der thermoplastische Kunststoff B) können auch weitere Zusatzstoffe enthalten. Dies sind zum Beispiel übliche Flammschutzmittel und weitere, dem Fachmann bekannte Additive, die üblicherweise Kunststoffen zugesetzt werden.
Die Mischung kann grundsätzlich nach allen dem Fachmann bekannten Verfahren hergestellt und in Verfahrensschritt b) eingesetzt werden. Es ist grundsätzlich möglich, den thermoplastischen Kunststoff B) und das chemische Treibmittel jeweils separat der Spritzgießmaschine zuzuführen und erst in dieser die Mischung zu erzeugen. Bevorzugt werden aber der thermoplastische Kunststoff B) und das chemische Treibmittel vor dem Spritzgießprozess gemäß Verfahrensschritt b) zu einer Mischung verarbeitet, beispielsweise werden der thermoplastische Kunststoff B) und das chemische Treibmittel jeweils in Pulver- oder Granulatform in dem Fachmann bekannten Mischvorrichtungen zu einem heterogenen Gemisch vermischt oder das chemische Treibmittel in Pulverform auf den thermoplastischen Kunststoff B) in Granulatform aufgetrommelt; es ist aber auch möglich, den thermoplastischen Kunststoff B) und das chemische Treibmittel in der Schmelze, beispielsweise in dem Fachmann bekannten Knetern oder Extrudern, zu einem vergleichsweise homogenen Blend zu vermischen, bevor die Mischung dann im Verfahrensschritt b) der erfindungsgemäßen Verfahren eingesetzt wird. Das chemische Treibmittel kann bei den genannten Verfahren auch in Form eines sogenannten Masterbatches eingesetzt werden.

Erfindungsgemäß einsetzbare thermoplastische Kunststoffe B) umfassen mindestens ein Polyamid mit einem im gesamten Temperaturbereich von 70°C bis 180°C vorliegenden Elastizitätsmodul aus dem Zugversuch (Zugmodul) Eₜ von 1 MPa bis 250 MPa, bevorzugt von 1 MPa bis 150 MPa, insbesondere bevorzugt von 1 MPa bis 50 MPa, (bestimmt gemäß DIN EN ISO 527 vom April 1996). Diese Polyamide weisen in der Regel einen sehr niedrigen Kristallinitätsgrad, insbesondere einen Kristallinitätsgrad von 1 % bis 40%, bevorzugt von 1 % bis 20% auf (der Kristallinitätsgrad ist ein Maß für den Anteil an kristallinen Fragmenten im Polyamid und kann durch Röntgenbeugung oder indirekt durch Messung der spezifischen Schmelzwärme ΔHₖᵣᵢₛₜ. mittels Differential Scanning Calorimetrie relativ zu einem vollständig kristallinen Polyamid bestimmt werden).
Bevorzugt sind als thermoplastische Kunststoffe B) Polyamid-Copolymere einsetzbar, insbesondere solche, die aus Caprolactam, Hexamethylendiamin, Adipinsäure und Bis(4-Aminocyclohexyl)methan als Monomereinheiten aufgebaut sind. Besonders bevorzugte thermoplastische Kunststoffe B) werden durch Copolymerisation von 15 Gew.-% bis 55 Gew.-% Caprolactam, 15 Gew.-% bis 55 Gew.-% Hexamethylendiamin, 15 Gew.-% bis 55 Gew.-% Adipinsäure und 15 Gew.-% bis 55 Gew.-% Bis(4-Aminocyclohexyl)methan erhalten, wobei die Gew.-% jeweils auf das Gesamtgewicht der vier genannten Monomere bezogen sind und zusammen 100 Gew.-% ergeben. Die als thermoplastische Kunststoffe B) einsetzbaren Polyamide als solche sowie deren Herstellung sind dem Fachmann bekannt und in der Literatur beschrieben.

Als chemisches Treibmittel können in der Mischung mit dem thermoplastischen Kunststoff B) ein oder mehrere in nicht-polymerisierter Form vorliegende Stoffe oder Stoffgemische eingesetzt werden, die bei erhöhten Temperaturen, insbesondere bei Temperaturen zwischen 130°C und 250°C, Gas, bevorzugt Stickstoff oder Kohlendioxid, abspalten. Solche chemischen Treibmittel sind dem Fachmann bekannt und in der Literatur beschrieben. Bevorzugte chemische Treibmittel sind 1,1'-Azobis(formamid), Sulfohydrazide wie 4,4'-Oxibisbenzolsulfohydrazid, p-Toluolsulfonylhydrazid oder p-Toluolsulfonylsemicarbazid, Dinitrosopentamethylentetramin, Phenyltetrazol, Alkalicarbonate oder -hydrogencarbonate, insbesondere Natriumcarbonat oder Natriumhydrogencarbonat, oder Gemische aus zwei oder mehr der genannten. Verbindungen. Als ganz besonders bevorzugtes chemisches Treibmittel wird ein Gemisch aus Natriumhydrogencarbonat und Zitronensäure eingesetzt; dieses Gemisch besteht vorzugsweise aus 10 Gew.-% bis 90 Gew.-%, insbesondere 20 Gew.-% bis 80 Gew.-%, besonders bevorzugt 30 Gew.-% bis 70 Gew.-%, Natriumhydrogencarbonat und 90 Gew.-% bis 10 Gew.-%, insbesondere 80 Gew.-% bis 20 Gew.-%, besonders bevorzugt 70 Gew.-% bis 30 Gew.-%, Zitronensäure, wobei die Gew.-% jeweils bezogen sind auf das Gesamtgewicht von Natriumhydrogencarbonat und Zitronensäure und zusammen 100 Gew.-% ergeben.

Die Mischung, umfassend als thermoplastischen Kunststoff B) mindestens ein Polyamid mit einem im gesamten Temperaturbereich von 70°C bis 180°C vorliegenden Elastizitätsmodul aus dem Zugversuch (Zugmodul) Eₜ von 1 MPa bis 250 MPa (bestimmt gemäß DIN EN ISO 527 vom April 1996) und als chemisches Treibmittel ein oder mehrere in nicht-polymerisierter Form vorliegende Stoffe, ist insbesondere zur erfindungsgemäßen Herstellung von Verbundbauteilen und verstärkten Trägerelementen geeignet.

Als Trägerelement kommen alle Bauteile infrage, welche mindestens einen Hohlraum aufweisen oder zumindest teilweise schalenförmig oder als Hohlprofil ausgeführt sind. Bevorzugte Trägerelemente liegen als Hohlprofile vor, insbesondere als Strangpressprofile oder Rohre.
Die Trägerelemente können grundsätzlich aus allen Werkstoffen bestehen, die unter den in Verfahrensschritten d) und e) herrschenden Temperaturen dimensionsstabil sind, beispielsweise auch hochtemperaturbeständige Kunststoffe. Bevorzugt bestehen die Trägerelemente aus metallischen Werkstoffen, insbesondere Stahl oder Aluminium. Bevorzugte Trägerelemente sind metallische Hohlprofile, insbesondere Karosseriebauteile, beispielsweise Holme, wie sie im Kfz-Bau eingesetzt werden.

Nach den erfindungsgemäßen Verfahren sind Verbundbauteile herstellbar, umfassend einen Grundkörper aus einem thermoplastischen Kunststoff A) und eine Außenschicht aus einem geschäumten thermoplastischen Kunststoff B). Diese Verbundbauteile sind insbesondere als Schall- und/oder Temperaturdämmelemente einsetzbar, beispielsweise als Resonanzwand (Baffle) oder als schallgedämmte Bauteile im Ansaugtrakt von Automobilen, z. B. Saugrohre, Luftfilter.

Weiterhin sind nach den erfindungsgemäßen Verfahren verstärkte Trägerelemente herstellbar, umfassend ein Trägerelement und ein als Verstärkungselement wirkendes Verbundbauteil, wobei das Verbundbauteil einen Grundkörper aus einem thermoplastischen Kunststoff A) und eine Außenschicht aus einem geschäumten thermoplastischen Kunststoff B) umfasst. Diese verstärkten Trägerelemente sind insbesondere als Karosseriebauteile einsetzbar, beispielsweise als Holme oder Fahrzeugunterboden- oder Dachversteifungen, aber auch als Brems- oder Kupplungspedale. Auch bei anderen Transportmitteln wie im Flugzeugbau oder bei Schienenfahrzeugen können solche Versteifungselemente eingesetzt werden.

Die erfindungsgemäßen Verfahren zur Herstellung von Verbundbauteilen durch Mehrkomponentenspritzguss sind durch verringerte Zykluszeiten und/oder verringerte Spritzgießdrucke und/oder bessere computergestützte Modellierbarkeit kostengünstiger als die im Stand der Technik beschriebenen Verfahren. Die nach diesen Verfahren herstellbaren Verbundbauteile sind bezüglich der Kombination der folgenden Eigenschaften
- Haftung der expandierbaren bzw. expandierten Außenschicht auf dem Grundkörper,
- Lager- und/oder Feuchtebeständigkeit sowohl im expandierbaren als auch im expandierten Zustand sowie
- Recyclierbarkeit
gegenüber bekannten Verbundbauteilen verbessert.

Die Erfindung wird nachstehend anhand von Beispielen näher erläutert.

### Beispiele:

### Einsatzstoffe:

Komponenten oder Versuche mit vorangestelltem "V-" sind nicht erfindungsgemäß und dienen zum Vergleich.

### Thermoplastischer Kunststoff A):

Als Komponenten A) wurden eingesetzt:
- A-i:: ein handelsübliches Polyamid, Ultramid^{®} B3WG6CR, der BASF SE.

### Thermoplastischer Kunststoff B):

Als Komponenten B) wurden eingesetzt:
- B-i:: ein handelsübliches Polyamid-Copolymer, Ultramid^{®} 1C, der BASF SE, hergestellt aus den Monomeren Caprolactam, Hexamethylendiamin, Adipinsäure und Bis(4-Aminocyclohexyl)methan.

### Chemisches Treibmittel:

Als chemische Treibmittel wurden eingesetzt:
- T-i:: ein handelsübliches chemisches Treibmittel, Hydrocerol^{®} ITP828, der Clariant Gruppe, umfassend ein Gemisch aus Natriumhydrogencarbonat und Zitronensäure.

### Beispiele 1-2:

Auf einer handelsüblichen Spritzgießmaschine und angeschlossener Spritzgießform mit den Abmessungen 150mm x 70mm x 3mm wurde aus thermoplastischem Kunststoff A) ein Grundkörper spritzgegossen. Direkt nach der Verfestigung des Grundkörpers wurde in der gleichen Spritzgießform nach Öffnen einer zusätzlichen Kavität eine zweite Schicht (Außenschicht) mit den oben genannten Abmessungen aus einer Mischung bestehend aus 97 Gew.-teilen thermoplastischem Kunststoff B) und 3 Gew.-teilen chemischem Treibmittel angespritzt, so dass sich die beiden Schichten teilweise überlappten. Das nach dem Abkühlen erhaltene Verbundbauteil mit nicht-geschäumter zweiter Schicht wurde anschließend 30 min in einem Wärmeschrank gelagert, um das Schäumen der zweiten Schicht zu bewirken. Nach dem Abkühlen wurden Verbundbauteile aus Grundkörper und geschäumter zweiter Schicht erhalten.
Die Art der eingesetzten Stoffe und die wesentlichen Parameter der einzelnen Verfahrensschritte werden in Tabelle 1 wiedergegeben.

**Tabelle 1:**

| | Beispiel 1 | Beispiel 2 |
|---|---|---|
| Thermoplastischer Kunststoff A) | A-i | A-i |
| Thermoplastischer Kunststoff B) | B-i | B-i |
| Chemisches Treibmittel | T-i | T-i |
| Spritzgießtemperatur von A) [°C] | 280 | 280 |
| Spritzgießtemperatur der Mischung aus B) und chemischem Treibmittel [°C] | 190 | 190 |
| Temperatur der Spritzgießform [°C] | 80 | 40 |
| Fließgeschwindigkeit der Mischung aus B) und chemischem Treibmittel [mm/s] | 50 | 70 |
| Nachdruck beim Spritzgießen der Mischung aus B) und chemischem Treibmittel [bar] | 500 | 600 |
| Schäumtemperatur [°C] | 180 | 180 |
| (Dicke der geschäumten Außenschicht / Dicke der nicht-geschäumten Außenschicht) | > 2 | > 2 |
| Haftung der geschäumten Außenschicht auf Grundkörper | gut | gut |

Die Beispiele belegen die verringerten Zykluszeiten und/oder verringerten Spritzgießdrucke und/oder bessere computergestützte Modellierbarkeit der erfindungsgemäßen Verfahren sowie die verbesserte Kombination aus Haftung der expandierbaren bzw. expandierten Außenschicht auf dem Grundkörper, der Lager- und/oder Feuchtebeständigkeit sowohl im expandierbaren als auch im expandierten Zustand sowie der Recyclierbarkeit der erfindungsgemäßen Verbundbauteile.

## Patentansprüche

1. Verfahren zur Herstellung eines Verbundbauteils durch Mehrkomponentenspritzguss, wobei das Verbundbauteil einen Grundkörper aus einem thermoplastischen Kunststoff A) und eine Außenschicht aus einem geschäumten thermoplastischen Kunststoff B) umfasst, bei dem
in einem ersten Verfahrensschritt a) durch Spritzgießen des thermoplastischen Kunststoffs A) und anschließender Verfestigung desselben in einer Spritzgießform der Grundkörper hergestellt wird, und
in einem direkt anschließenden zweiten Verfahrensschritt b) durch Spritzgießen einer Mischung, umfassend den thermoplastischen Kunststoff B) und ein chemisches Treibmittel, und anschließender Verfestigung der Mischung in derselben Spritzgießform, mit jedoch erweiterter Kavität, eine Außenschicht an den Grundkörper angespritzt wird, und
in einem weiteren Verfahrensschritt d) die an den Grundkörper angespritzte Außenschicht durch Zufuhr thermischer Energie aufgeschäumt wird, und
in einem abschließenden Verfahrensschritt e) durch Abkühlung die Verfestigung des Verbundbauteils erfolgt,
**dadurch gekennzeichnet, dass** die in Verfahrensschritt b) eingesetzte Mischung als thermoplastischen Kunststoff B) mindestens ein Polyamid mit einem im gesamten Temperaturbereich von 70°C bis 180°C vorliegenden Elastizitätsmodul aus dem Zugversuch (Zugmodul) Et von 1 MPa bis 250 MPa (bestimmt gemäß DIN EN ISO 527 vom April 1996) und als chemisches Treibmittel ein oder mehrere in nicht-polymerisierter Form vorliegende Stoffe umfasst.

2. Verfahren nach Anspruch 1, **dadurch gekennzeichnet, dass** nach dem zweiten Verfahrensschritt b) und vor dem weiteren Verfahrensschritt d) der Grundkörper mit angespritzter Außenschicht der Spritzgießform entnommen wird, und in einem Verfahrensschritt c) in ein hohlraum-aufweisendes, schalenförmiges oder als Hohlprofil ausgeführtes Trägerelement eingebracht wird, so dass das nach dem abschließenden Verfahrensschritt e) erhaltene Verbundbauteil als Verstärkungselement für das Trägerelement wirkt.

3. Verfahren nach Anspruch 2, **dadurch gekennzeichnet, dass** das Trägerelement ein aus Metall gefertigtes Hohlprofil ist.

4. Verfahren nach Ansprüchen 1 bis 3, **dadurch gekennzeichnet, dass** der Grundkörper aus einem faserverstärkten Kunststoff besteht.

5. Verfahren nach Ansprüchen 1 bis 4, **dadurch gekennzeichnet, dass** der thermoplastische Kunststoff B) ein Polyamid-Copolymer ist, welches Caprolactam, Hexamethylendiamin, Adipinsäure und Bis(4-Aminocyclohexyl)methan als Monomereinheiten enthält.

6. Verfahren nach Ansprüchen 1 bis 5, **dadurch gekennzeichnet, dass** als chemisches Treibmittel ein oder mehrere Stoffe ausgewählt aus der Gruppe 1,1'-Azobis(formamid), Sulfohydrazide, Dinitrosopentamethylentetramin, Phenyltetrazol, Natriumcarbonat und Natriumhydrogencarbonat eingesetzt wird.

7. Verbundbauteil, herstellbar nach einem der Ansprüche 1 bis 6 und umfassend einen Grundkörper aus einem thermoplastischen Kunststoff A) und eine Außenschicht aus einem geschäumten thermoplastischen Kunststoff B).

8. Verstärktes Trägerelement, herstellbar nach einem der Ansprüche 2 bis 6 und umfassend ein Trägerelement und ein als Verstärkungselement wirkendes Verbundbauteil, wobei das Verbundbauteil einen Grundkörper aus einem thermoplastischen Kunststoff A) und eine Außenschicht aus einem geschäumten thermoplastischen Kunststoff B) umfasst.

9. Verwendung einer Mischung, umfassend als thermoplastischen Kunststoff B) mindestens ein Polyamid mit einem im gesamten Temperaturbereich von 70°C bis 180°C vorliegenden Elastizitätsmodul aus dem Zugversuch (Zugmodul) Eₜ von 1 MPa bis 250 MPa (bestimmt gemäß DIN EN ISO 527 vom April 1996) und als chemisches Treibmittel ein oder mehrere in nicht-polymerisierter Form vorliegende Stoffe, zur Herstellung von Verbundbauteilen gemäß Anspruch 7.

## Claims

1. A process for the production of a composite component via multicomponent injection molding, where the composite component comprises a main body composed of a thermoplastic A) and an external layer composed of a foamed thermoplastic B), where
the main body is produced in a first process step a) via injection molding of the thermoplastic A) and subsequent hardening of the same in an injection mold, and
an external layer is injected on to the main body in a second process step b) which follows directly, via injection molding of a mixture comprising the thermoplastic B) and comprising a chemical blowing agent, and the mixture is subsequently hardened in the same injection mold, with somewhat extended cavity, and
the external layer injected on to the main body is foamed in a further process step d) via introduction of heat, and
the composite component is solidified via cooling in a final process step e),
which comprises using, as thermoplastic B) in the mixture used in process step b), at least one polyamide whose modulus of elasticity derived from the tensile test (tensile modulus) Eₜ is from 1 MPa to 250 MPa (determined to DIN EN ISO 527 of April 1996) in the entire temperature range from 70°C to 180°C, and using, as chemical blowing agent in the mixture used in process step b), one or more substances present in non-polymerized form.

2. The process according to claim 1, wherein, after the second process step b) and prior to the further process step d), the main body with external layer injected on to the same is removed from the injection mold, and, in a process step c), is introduced into a load-bearing element which is hollow, or of shell type, or is of hollow-profile design, so that the composite component obtained after the final process step e) acts as reinforcement element for the load-bearing element.

3. The process according to claim 2, wherein the load-bearing element is a hollow profile manufactured from metal.

4. The process according to claims 1 to 3, wherein the main body is composed of a fiber-reinforced plastic.

5. The process according to claims 1 to 4, wherein the thermoplastic B) is a polyamide copolymer which comprises, as monomer units, caprolactam, hexamethylenediamine, adipic acid, and bis(4-aminocyclohexyl)methane.

6. The process according to claims 1 to 5, wherein the chemical blowing agent used comprises one or more substances selected from the group of 1,1'-azobis(formamide), sulfohydrazides, dinitrosopentamethylenetetramine, phenyltetrazole, sodium carbonate, and sodium hydrogencarbonate.

7. A composite component that can be produced according to any of claims 1 to 6 and that comprises a main body composed of a thermoplastic A) and comprises an external layer composed of a foamed thermoplastic B).

8. A reinforced load-bearing element that can be produced according to any of claims 2 to 6, comprising a load-bearing element and a composite component acting as reinforcement element, where the composite component comprises a main body composed of a thermoplastic A) and comprises an external layer composed of a foamed thermoplastic B).

9. The use of a mixture that comprises, as thermoplastic B), at least one polyamide whose modulus of elasticity derived from the tensile test (tensile modulus) Eₜ is from 1 MPa to 250 MPa (determined to DIN EN ISO 527 of April 1996) in the entire temperature range from 70°C to 180°C, and that comprises, as chemical blowing agent, one or more substances present in non-polymerized form, for the production of composite components according to claim 7.

## Revendications

1. Procédé de fabrication d'un élément composite par moulage par injection à plusieurs composants, l'élément composite comprenant un corps de base constitué d'un plastique thermoplastique A) et une couche extérieure constituée d'un plastique thermoplastique moussé B), selon lequel
lors d'une première étape de procédé a), le corps de base est fabriqué par moulage par injection du plastique thermoplastique A), puis solidification de celui-ci dans un moule de moulage par injection, et lors d'une deuxième étape de procédé b) directement ultérieure, une couche extérieure est injectée sur le corps de base par moulage par injection d'un mélange comprenant le plastique thermoplastique B) et un agent gonflant chimique, puis solidification du mélange dans le même moule de moulage par injection, ayant toutefois une cavité élargie, et
lors d'une étape de procédé supplémentaire d), la couche extérieure injectée sur le corps de base est moussée par apport d'énergie thermique, et
lors d'une étape de procédé finale e), la solidification de l'élément composite a lieu par refroidissement,
**caractérisé en ce que** le mélange utilisé à l'étape de procédé b) comprend en tant que plastique thermoplastique B) au moins un polyamide ayant un module d'élasticité issu de l'essai de traction (module de traction) Eₜ, dans l'ensemble de la plage de température allant de 70 °C à 180 °C, de 1 MPa à 250 MPa (déterminé selon DIN EN ISO 527 d'avril 1996) et en tant qu'agent gonflant chimique une ou plusieurs substances présentes sous forme non polymérisée.

2. Procédé selon la revendication 1, **caractérisé en ce que** le corps de base comprenant une couche extérieure injectée est sorti du moule de moulage par injection après la deuxième étape de procédé b) et avant l'étape de procédé supplémentaire d), et est introduit lors d'une étape de procédé c) dans un élément support comprenant une cavité, en forme d'enveloppe ou en forme de profilé creux, de manière à ce que l'élément composite obtenu après l'étape de procédé finale e) agisse en tant qu'élément de renforcement pour l'élément support.

3. Procédé selon la revendication 2, **caractérisé en ce que** l'élément support est un profilé creux fabriqué en un métal.

4. Procédé selon les revendications 1 à 3, **caractérisé en ce que** le corps de base est constitué d'un plastique renforcé par des fibres.

5. Procédé selon les revendications 1 à 4, **caractérisé en ce que** le plastique thermoplastique B) est un copolymère de polyamide qui contient du caprolactame, de l'hexaméthylènediamine, de l'acide adipique et du bis(4-aminocyclohexyl)méthane en tant qu'unités monomères.

6. Procédé selon les revendications 1 à 5, **caractérisé en ce qu'**une ou plusieurs substances choisies dans le groupe 1,1'-azobis(formamide), sulfohydrazide, dinitrosopentaméthylènetétramine, phényltétrazole, carbonate de sodium et hydrogénocarbonate de sodium sont utilisées en tant qu'agent gonflant chimique.

7. Élément composite, pouvant être fabriqué selon l'une quelconque des revendications 1 à 6 et comprenant un corps de base constitué d'un plastique thermoplastique A) et une couche extérieure constituée d'un plastique thermoplastique moussé B).

8. Élément support renforcé, pouvant être fabriqué selon l'une quelconque des revendications 2 à 6 et comprenant un élément support et un élément composite agissant en tant qu'élément de renforcement, l'élément composite comprenant un corps de base constitué d'un plastique thermoplastique A) et une couche extérieure constituée d'un plastique thermoplastique moussé B).

9. Utilisation d'un mélange, comprenant en tant que plastique thermoplastique B) au moins un polyamide ayant un module d'élasticité issu de l'essai de traction (module de traction) Et, dans l'ensemble de la plage de température allant de 70 °C à 180 °C, de 1 MPa à 250 MPa (déterminé selon DIN EN ISO 527 d'avril 1996) et en tant qu'agent gonflant chimique une ou plusieurs substances présentes sous forme non polymérisée, pour la fabrication d'éléments composites selon la revendication 7.
